Europäisches Patentamt

European Patent Office

Office européen des brevets

(19)

(11) **EP 1 052 812 A2**

(12) **EUROPEAN PATENT APPLICATION**

(43) Date of publication:
**15.11.2000 Bulletin 2000/46**

(51) Int. Cl.[7]: **H04L 12/56**, H04B 7/185

(21) Application number: **00109855.7**

(22) Date of filing: **10.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **12.05.1999 US 133732 P**
**04.02.2000 US 498840**

(71) Applicant:
**Hughes Electronics Corporation**
**El Segundo, California 90245-0956 (US)**

(72) Inventors:
• **Ragland, Roderick**
**Bethesda, Maryland 20817 (US)**

• **Roy, Satyajit**
**Gaithersburg, Maryland 20879 (US)**
• **Olariu, Gabriel**
**Gaithersburg, Maryland 20877 (US)**
• **Dillon, Douglas M.**
**Gaithersburg, Maryland 20879 (US)**

(74) Representative:
**Lindner, Michael, Dipl.-Ing. et al**
**Witte, Weller & Partner,**
**Patentanwälte,**
**Postfach 105462**
**70047 Stuttgart (DE)**

(54) **Technique for load balancing internet traffic over a hybrid asymmetric satelliteterrestrial network**

(57) A load balancing technique for optimally routing data packets to a hybrid terminal (130) over an asymmetric hybrid network link, which utilizes a bi-directional terrestrial channel (150) and a satellite channel (140). For each data packet received from an Internet server (160), a load-balancing algorithm is employed to determine whether to route the packet via the bi-directional terrestrial channel (150) or the satellite channel (140). The load-balancing algorithm is designed so relatively small data packets are transmitted over the bi-directional terrestrial channel (150), while larger data packets are transmitted over the satellite channel (140). All data packets lost during terrestrial transmission are re-transmitted over the satellite channel (140). Additional value-added services are added to redirect all Internet traffic terrestrially when the hybrid terminal (130) experiences rain fade or other condition, which disrupts the satellite channel (140)

FIG. 2

EP 1 052 812 A2

Description

## BACKGROUND OF THE INVENTION

### Field of the Invention

The present invention relates generally to data transmission over a broadcast communication network. More particularly, the present invention relates to load balancing Internet traffic over a hybrid asymmetric satellite-terrestrial network.

### Description of Related Art

Hybrid Internet access is a low-cost alternative to achieving high-speed digital transmission. Most computer users, especially those in a home environment, consume more data than they generate (asymmetric computer use). In a hybrid network, an asymmetric TCP/IP (Transmission Control Protocol/Internet Protocol) connection is used to break the network link between a server and a client terminal into two physical channels. One channel is a terrestrial (dial-up modem) link for carrying data from the client terminal into the Internet and ultimately to the server. The second channel is a satellite link for carrying IP packets from the Internet to the client terminal. The client terminal initiates requests over the terrestrial link and receives data over the satellite link, which has a greater capacity than the terrestrial link.

Receive-only geosynchronous (GEO) satellites are often utilized in hybrid networks due to their ability to economically provide high bandwidth services to a large geographical area. However, GEO satellites tend to have a relatively high packet latency of approximately 250 milliseconds one-way. In particular, when Internet traffic flow is high, data is often congested and delayed in queues before being transmitted over the satellite link.

Since hybrid network performance can be measured by the time required to display a complete Web page after a request has been made, high packet latency causes network performance to suffer. Therefore, there continues to be a need to reduce packet latency in a hybrid network.

## SUMMARY OF THE INVENTION

The load balancing technique of the present invention routes data packets to a hybrid terminal over an asymmetric hybrid network link, which utilizes both a bi-directional terrestrial channel and a satellite channel. For each data packet received from an Internet server, a load-balancing algorithm is employed to determine whether to route the packet via the bi-directional terrestrial channel or the satellite channel. The load-balancing algorithm is designed so relatively small data packets are transmitted over the bi-directional terrestrial channel, while larger data packets are transmitted over the satellite channel. Any data packets lost during terrestrial transmission are re-transmitted over the satellite channel. Additional value-added services are added to redirect all Internet traffic terrestrially when the hybrid terminal experiences rain fade or other conditions, which disrupts the satellite channel.

## BRIEF DESCRIPTION OF THE DRAWINGS

Figure 1 illustrates a general hybrid network according to one embodiment of the present invention;
Figure 1(a) illustrates the controller of Figure 1 in more detail;
Figure 2 illustrates a more detailed hybrid network according to one embodiment of the present invention;
Figure 3 illustrates a method according to one embodiment of the present invention;
Figure 4 illustrates one embodiment of an encapsulated IP packet according to one embodiment of the present invention;
Figure 5 illustrates a Host Monitoring Protocol message format compliant with RFC 869;
Figure 6 illustrates the format and contents of HMP message header fields and data fields according to one embodiment of the present invention;
Figure 7 illustrates HMP message flow according to one embodiment of the present invention;
Figure 8 illustrates the format of a tunneled terrestrial packet according to one embodiment of the present invention;
Figure 9 illustrates the format of a TLB (Terrestrial Load Balance) Header field according to one embodiment of the present invention; and
Figure 10 illustrates the format of a satellite IP packet according to one embodiment of the present invention.

## DETAILED DESCRIPTION OF THE INVENTION

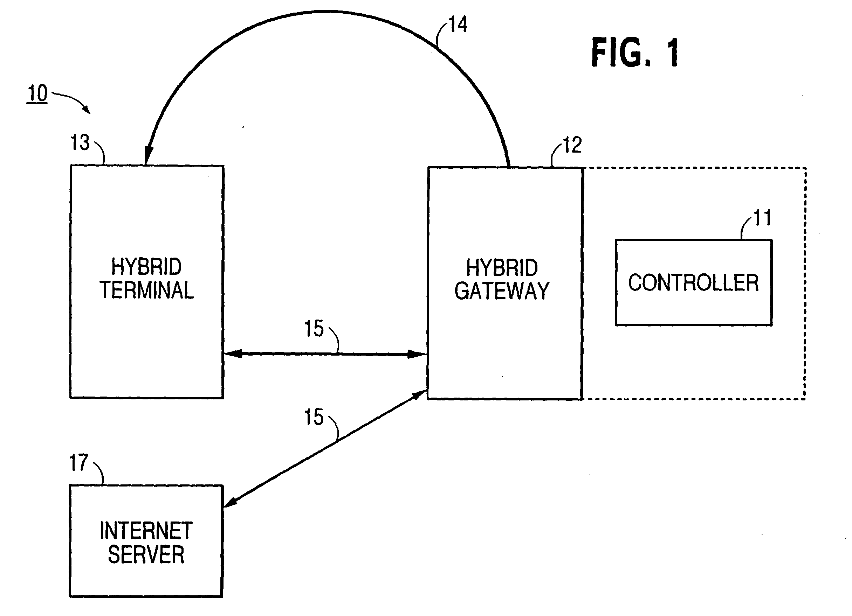

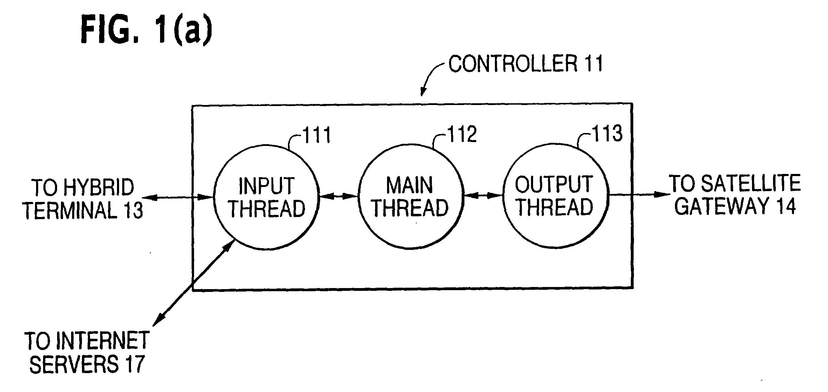

Figure 1 illustrates a general hybrid network 10 according to one embodiment of the present invention. In this embodiment, the hybrid network 10 includes a controller 11 commanding a hybrid gateway 12 to receive requests for data from a hybrid terminal 13 and to optimally route requested data to the hybrid terminal 13 either via a satellite channel 14 or a bi-directional terrestrial channel 15. The hybrid gateway 12 also interfaces with an internet server 17 via the bi-directional terrestrial channel 15. As indicated by broken lines, the controller 11 may be included in or may be external from the hybrid gateway 12. The controller 11 and/or hybrid gateway 12 may be any PC (Personal Computer), settop box, server, processor, computer system, Internet-accessible device or other type of device known to those skilled in the art capable of functioning as described herein. The controller 11 and/or hybrid gateway 12 also may include any type of hardware, software, application or program known to those skilled in the art capable of executing such functions and such software, application or program may be embodied in an article of manufacture or a propagated signal.

Figure 1(a) illustrates the controller 11 of Figure 1 in more detail. In particular, the controller 11 includes an input thread 111 which interacts with the hybrid terminal 13 and the internet sever 17. In particular, the input thread 111 accepts input packets from the hybrid terminal 13 or the internet server 17, untunnels the received packets, and forwards the packets to a main thread 112. The main thread 112 performs spoofing operations, performs routing decisions for the terrestrial low band (TLB) and places the packets in a queue to be sent to an output thread 113. The output thread 113 encapsulates and queues packets to be sent to the satellite gateway 14.

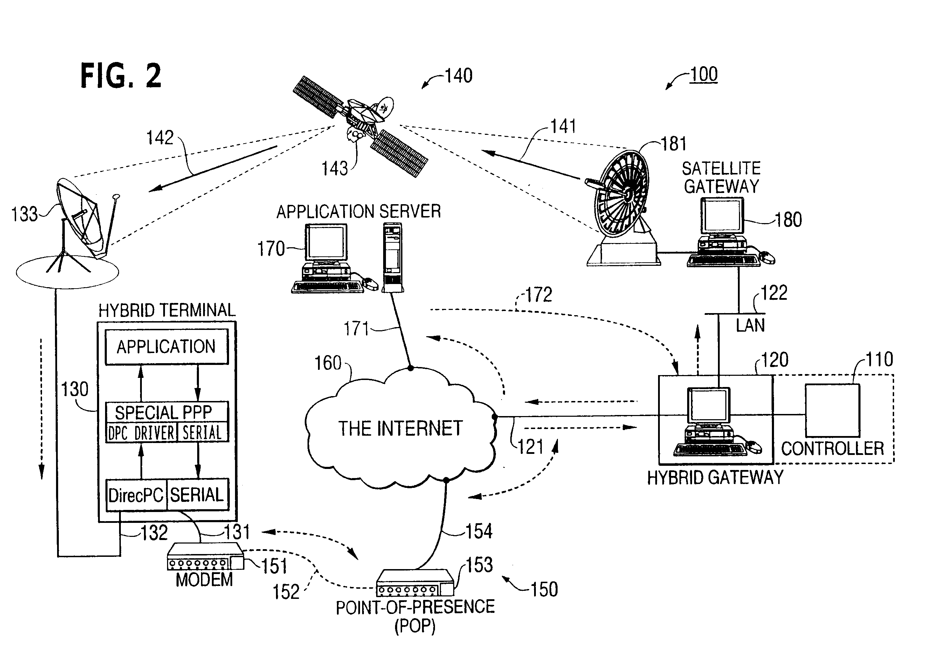

Figure 2 illustrates a more detailed illustration of a hybrid network 100 according to another more specific embodiment of the present invention. Similar to the previous embodiment, a controller 110 commands a hybrid gateway 120 to receive requests for data from a hybrid terminal 130 over a bi-directional terrestrial channel 150 and to optimally route requested data to the hybrid terminal 130 over a satellite channel 140 and the bi-directional terrestrial channel 150. In this embodiment, all traffic into and out of the hybrid terminal 130 passes through the hybrid gateway 120.

The hybrid terminal 130 includes a first network interface 131 for connecting to the bi-directional terrestrial channel 150 and a second network interface 132 for connecting to the satellite channel 140. The first network interface 131 may be any type of serial port for interfacing the hybrid terminal 130 with a dial-up modem, ADSL (Asymmetric Digital Subscriber Line), ISDN (Integrated Services Digital Network), cable or other terrestrial link. The second network interface 132 may be a PCI (Peripheral Component Interconnect) bus PC (Personal Computer) adapter, USB (Universal Serial Bus) adapter or any other suitable adapter for interfacing the hybrid terminal 130 with the satellite channel 140. The hybrid terminal 130 further includes a NDIS (Network Device Interface Specification) compliant driver tat combines the two interfaces and makes them appear as one virtual interface to the upper layer TCP/IP protocol stack.

As shown, the bi-directional terrestrial channel 150 between the hybrid terminal 130 and the hybrid gateway 120 may include one or more terrestrial links 152, 154 and interconnected servers 151, 153, which make up and/or provide access to the Internet 160. One or more of these servers 151, 153 can be configured as an ISP (Internet Service Provider) for the hybrid terminal 130 and may support PPP (Point-to-Point Protocol) or SLIP (Serial Line Internet Protocol). The hybrid gateway 120 receives the requests for data from the hybrid terminal 130 over the bi-directional terrestrial link 150. In this embodiment, all traffic from the hybrid terminal 130 is transmitted to the hybrid gateway 120 through IP-within-IP encapsulation or an IP tunnel, discussed in more detail below.

In response to the requests for data, the hybrid gateway 120 routes the requests for data and retrieves the requested data from an Internet server 170 via terrestrial connections 121, 171 and/or a satellite link 172 between the Internet server 170 and the hybrid gateway 120. Under the command of the controller 110, the hybrid gateway 120 determines whether to transmit the requested data to the hybrid terminal 130 via the bi-directional terrestrial channel 150 or the satellite channel 140.

When it is determined to transmit the requested data over the satellite channel 140, the hybrid gateway 120 sends the requested data to a satellite gateway 180. As shown, the controller 110 and hybrid gateway 120 are connected to the satellite gateway 180 via LAN (Local Area Network) 122 or any other suitable connection. In this embodiment, the satellite gateway 180 receives frames from the hybrid gateway 120 and parses the frames into individual data packets. The satellite gateway 180 may maintain several priority queues for holding the data packets and may periodically transmit peak and avenge packet latency measurements to the hybrid gateway 120 for flow control purposes. The satellite gateway 180 then directs the data packets from the priority queues to a transmitter 181, which sends the data packets over the satellite channel 140. The satellite channel 140 includes a satellite uplink 141, a satellite downlink 142 and a GEO satellite 143. One example of the GEO satellite 133 is a VSAT (Very Small Aperture Terminal) available from Hughes Network Systems. The data packets flow through the satellite channel 140 and are received by an antenna 133 of the hybrid terminal 130.

When it is determined to transmit the requested data over the bi-directional channel 150, the hybrid gateway 120 sends the data packets back through the Internet 160 and the bi-directional terrestrial channel 150 to the hybrid terminal 130 via terrestrial links 121, 154, 152 and servers 153, 151.

The hybrid terminal 130 receives the data packets over both the satellite channel 140 and the bi-directional terrestrial channel 150 and reconstitutes the requested data. The hybrid terminal 130 may include any type of hardware, software, application or program known to those skilled in the art capable of processing and displaying the requested data. Such applications may include, for example, a graphical browser application for accessing and viewing documents, helper applications called upon by the browser to display content types not internally supported by the browser, and/or plug-in applications that function as helper applications within the browser.

In the embodiments of present invention, the controller 11, 110 commands the hybrid gateway 12, 120 to perform tasks, which achieve better throughput in the network 10, 100. The functions of the controller 11, 110 will typically be implemented underneath an existing IP protocol stack implementation. This underneath implementation is referred to as a BITS (Bump-in-the-Stack) implementation. In one embodiment of the present invention, the functions of the controller 11, 110 are performed between the link and network layers of a TCP/IP protocol suite or at the network layer of the TCP/IP protocol suite.

The TCP/IP protocol suite is a combination of different protocols at various layers. Similar to the ISO (International Organization for Standardization) 7-Layer Reference Model, the TCP/IP layering scheme includes four conceptual layers (link, network, transport, application) that build on a fifth layer of hardware. Each layer of the TCP/IP protocol suite has a unique responsibility within the communication sequence. The link layer is responsible for interfacing the hardware and communication channel within the network. The network layer routes data packets in the network. The transport layer provides data flow between hosts for the application layer utilizing TCP (Transmission Control Protocol) and UDP (User Datagram Protocol). The application layer handles the details of the particular application.

By using BITS implementation between the link layer and the network layer or at the network layer, the controller 11, 110 shields or operates transparently to the TCP/IP protocol. It is to be understood, however, that such functions may be implemented anywhere within any protocol suite as would be understood by one of ordinary skill in the art.

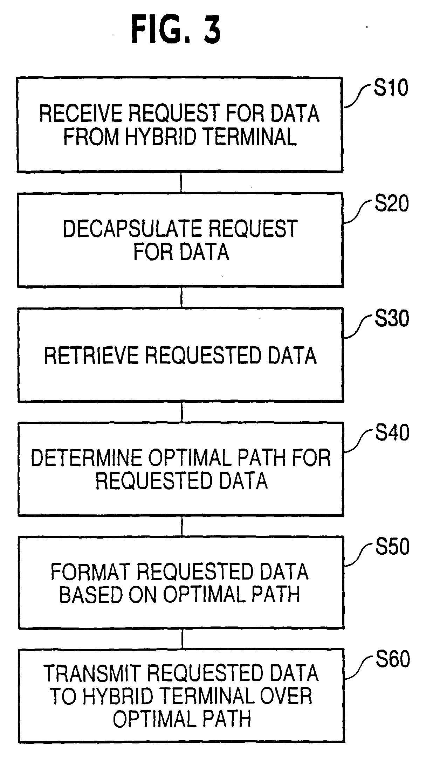

The operation of the present invention will now be described with reference to Figures 1-10. The hybrid gateway 120 receives requests for data from the hybrid terminal 130 (step S10) of Figure 3. As mentioned above, the requests from the hybrid terminal 130 are transmitted to the hybrid gateway 120 through IP-within-IP encapsulation or an IP tunnel. Such encapsulation or tunneling is advantageous to accomplish asymmetric routing in the Internet 160 while maintaining interoperability with the rest of the Internet 160. That is, IP-within-IP encapsulation obviates the need to modify existing Internet protocols and/or routers.

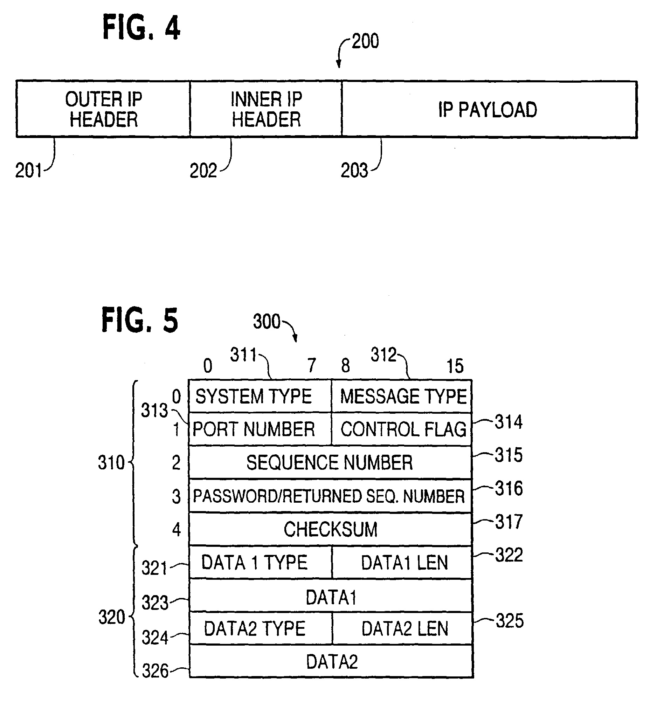

Figure 4 illustrates one embodiment of an encapsulated IP packet 200. The IP packet includes an Outer IP Header field 201, an Inner IP Header field 202 and an IP Payload field 203. The Outer IP Header field 201 and the Inner IP Header field 202 each contain a source address and a destination address and are used to route the data contained in the IP Payload field 203. For example, the encapsulated IP packet 200 may represent a request for data from the hybrid terminal 130. In such a case, the IP Payload field 203 contains data pertaining to the information requested by the hybrid terminal 130. The IP address assigned to the hybrid terminal 130 is designated as the source address in the Inner IP Header field 202 and the IP address assigned to the Internet server 170 storing the requested data is designated as the destination address in the Inner IP Header field 202. Dynamic assignment of IP addresses typically is made by the ISP 153 to which the hybrid terminal 130 is connected (via 152).

In this embodiment of the present invention, all traffic to and from the hybrid terminal 130 must pass through the hybrid gateway 120. Therefore, the IP address assigned to the hybrid terminal 130 by the ISP 153 is designated as the source address in the Outer IP Header field 201 and the IP address assigned to the hybrid gateway 120 is designated as the destination address in the Outer IP Header field 201. Thus, the data in the IP Payload field 203 is directed to the hybrid gateway 120 before being sent to the Internet server 170 storing the requested data.

In order to direct the data in the IP Payload field 203 to the Internet server 170, the hybrid gateway 120 must decapsulate the requests for data from the hybrid terminal (step S20) of Figure 3. That is, under the command of the controller 110, the hybrid gateway strips the Outer IP Header field 201 of the IP packet 200 and directs the stripped packet to the Internet server 170 storing the requested data using the source address and destination address in the Inner IP Header 202.

The Internet server 170 processes the request for data and transmits the requested data back to the hybrid gateway 120. The requested data transmitted to the hybrid gateway 120 includes an IP Header field and an IP Payload field (not shown). The IP address assigned to the Internet server 170 is designated as the source address in the IP Header field and the IP address assigned to the hybrid terminal 130 is designated as the destination address in the IP Header field. Thus, the hybrid gateway 120 receives the requested data from the Internet server 170 (step S30) of Figure 3 on behalf of the hybrid terminal 130.

Under the command of the controller 110, the hybrid gateway 120 then determines the optimal path for the requested data (step S40) of Figure 3. The determination of whether to transmit via the satellite channel 140 or the terrestrial channel 150 is made by performing the TLB (Terrestrial Load Balancing) technique of the present invention, as described below. TCP spoofing may also be performed to achieve better throughput. Furthermore, if the satellite channel 140 is unavailable due to rain fade or other debilitating conditions, some or all satellite traffic may be redirected over the terrestrial channel 150.

Based on the determination of the better path, the requested data is formatted for transmission (step S50) of Figure 3. Under the command of the controller 110, the IP packet structure of the requested data is modified according to whether the data is to be transmitted over the satellite channel 140 or the terrestrial channel 150. This feature is discussed in greater detail below.

Finally, the controller 110 commands the hybrid gateway 120 to transmit requested data back to the hybrid terminal 130 over the better path (step S60) of Figure 3.

Determining the better path for requested data using the TLB technique of the present invention will now be described. The TLB technique is performed in response to commands from the controller 11, 110 and ultimately decreases user response time to the hybrid terminal 13, 130 by optimally routing data packets over the bi-directional terrestrial channel and the satellite channel.

According to the present invention, the controller 11, 110 commands the hybrid gateway 12, 120 to compute cost values for the terrestrial link 15, 150 and the satellite link 14, 140 using a cost equation. The cost equation take into consideration the size of the data packet, the number of unacknowledged bytes of the channels 14, 140, 15, 150 the number of retransmitted bytes of the channels 14, 140, 15, 150 the capacity of the channels 14, 140, 15, 150 and the latency of the channels 14, 140, 15, 150. Latency measurements are periodically made for both the satellite channel 14, 140 and the terrestrial channel 15, 150 and included in the cost equations. The calculated cost values are used to determine the optimal path for a data packet from the hybrid gateway 12, 120 to the hybrid terminal 13, 130 so as to minimize response time for receiving data packets. That is, the controller 11, 110 commands the data packet to be transmitted over the channel with the lower calculated cost value. As will be recognized, TLB is designed to transmit small packets over the terrestrial channel 15, 150 and large packets over the satellite channel 14, 140.

In a preferred embodiment, the controller 11, 110 uses the following TLB cost equation to determine the optimal pat to transmit a data packet from the hybrid gateway 12, 120 on a per-connection basis.

$$T_i(x) = \left\lceil \frac{sizeof\ (x) + O_{i,j} + R_{\bar{i}}}{C_i} \right\rceil + D_i$$

In the above equation, "$x$" is the data packet to be transmitted and $sizeof(x)$ represents the packet size in bytes; $i$ represents the link index, $j$ represents the TCP connection, $C_i$ is the capacity of the link, $O_{ij}$ is the number of unacknowledged bytes (for an individual connection), $R_i$ is the number of retransmitted bytes on the hybrid terminal (including all active connections) and $D_i$ is the packet latency of the link. The satellite link is designated when $i=0$ and the terrestrial link is designated when $i=1$. $R_0$ is not necessary for the satellite link and is set to zero. $R_1$ is the number of terrestrial retransmitted bytes, multiplied by an expansion factor, as indicated below. It should be noted that the values of $O_{ij}$ and $R_i$ are always greater than or equal to zero.

The packet latency $D_i$ preferably assumes the following values: $D_0 = D_{SATQ} + BIAS_i + 0.250$ and $D_1 = D_{HMP}$, where $D_0$ is the packet latency of the satellite link 14, 140 and $D_1$ is the packet latency of the terrestrial link 15, 150. For the packet latency of the satellite link $D_0$, $D_{SATQ}$ is a measurement based on average latency of several priority queues and represents that rate at which the satellite queue can be serviced. $D_{SATQ}$ may be used as an indicator in determining whether to increase or decrease traffic flow over the satellite link 14, 140. $BIAS_i$ is the per-application bias or offset that can be applied to the routing algorithm. $BIAS_i$, by default, is set to 0 but may assume a value in order to bias the satellite cost value calculation. It should be noted that the $BIAS_i$ factor is only used to adjust the satellite cost equation. The value 0.25 is used to represent the satellite one-way path latency of 250 milliseconds. The above values are only representative and each may be modified in accordance with the characteristics of a particular network.

For the packet latency of the terrestrial link $D_1$, $D_{HMP}$ is one half (1/2) of the RTT (Round-Trip Time) as measured from the HMP (Host Monitoring Protocol) messages. This feature is discussed in more detail below.

For each data packet $x$ to be transmitted, the controller 11, 110 commands the hybrid gateway 12, 120 to calculate $T_0(x)$ and $T_1(x)$. If $T_1(x) < T_0(x)$ and $O_{1j} \leq$ the number of outstanding bytes on the connection (in one exemplary implementation, $2^{15}$ or 16,384) then the data packet $x$ is transmitted over the terrestrial link 15, 150; else the data packet $x$ is transmitted over the satellite link 14, 140.

After a decision has been made to transmit a data packet $x$ over the selected link, the following updating steps are performed. When the data packet $x$ is transmitted for the first time, the number of unacknowledged bytes $O_{ij}$ for the connection is increased according to the following First Time Packet Transmission equation:

$$O_{ij} = O_{ij} + sizeof(x)$$

Upon acknowledgement of the data packet $x$ transmitted over the satellite connection, the number of unacknowledged bytes in the satellite connection $O_{0j}$ is decreased according to the following Satellite Packet Acknowledgment equation:

$$O_{0j} = Max[(O_{0j} - sizeof(x)), 0]$$

Upon acknowledgment of the data packet $x$ transmitted over the terrestrial connection is received, the number of unacknowledged bytes in the terrestrial connection $O_{1j}$ and the number of retransmitted bytes in the terrestrial connection are decreased according to the following Terrestrial Packet Acknowledgment equations:

$$O_{1j} = Max[(O_{1j} - sizeof(x)),0]$$

$$R_1 = Max[(R_1 - sizeof(x),0]$$

Upon retransmission of the data packet $x$ over the satellite connection, the number of unacknowledged bytes for the satellite connection $O_{0j}$ remains unchanged.

Upon retransmission of the data packet $x$ over the terrestrial connection, the number of unacknowledged bytes in the terrestrial connection $O_{1j}$ connection is decreased, the number of unacknowledged bytes in the satellite connection $O_{0j}$ is increased and the number of retransmitted bytes in the terrestrial connection $R_1$ is increased according to the following Terrestrial Packet Re-transmission equations:

$$O_{1j} = Max[(O_{1j} - sizeof(x)),0]$$

$$O_{0j} = O_{0j} + sizeof(x)$$

$$R_1 = R_1 + \zeta * sizeof(x), \text{ where } \zeta = 2.0$$

The number of unacknowledged bytes on the terrestrial link $O_{1j}$ limits the amount of traffic transmitted over the terrestrial link to avoid congestion. This is necessary because the TCP stack implementation on the hybrid gateway 12, 120, which transmits data packets on the satellite uplink, may not implement IETF (Internet Engineering Task Force) slow start and congestion avoidance algorithms. In addition, for each terrestrial packet retransmitted, the terrestrial cost value $T_1(x)$ is incremented with the size (or expanded size as indicated by $\zeta$) of that data packet. The variable $R_1$ accounts for the number of lost terrestrial packets and discourages the routing of further packets over the terrestrial link.

To prevent a deadlock condition where $R_1$ increases to a point where the TLB algorithm no longer determines that data packets should be transmitted terrestrially, the exchange of HMP (Host Monitoring Protocol) messages is used to decrement $R_1$ along with the successful transmission of terrestrial packets. That is, the successful transmission of HMP messages is used to gradually decrease $R_1$ to enable the routing algorithm to progressively send packets over the terrestrial connection.

The HMP messages are used to calculate the round-trip packet latency from the hybrid gateway 12, 120 to the hybrid terminal 13, 130 over the terrestrial link. The HMP is an IETF (Internet Engineering Task Force) Standard (RFC 869) and is used to collect information from hosts in the network. This protocol is used to convey important configuration information and perform RTT measurements between hybrid terminals and their assigned hybrid gateway.

For each connection, the hybrid gateway 12, 120 measures the number of successfully received HMP messages from the hybrid terminal 13, 130 over a period of time. If the number of HMP messages is above a threshold, $R_1$ is decreased by a defined value. The HMP measurement time period, the HMP message count threshold and the $R_1$ decrease byte count are each configurable parameters. For example, the HMP measurement time period may be set at 5 minutes, the HMP message count threshold may be set at 80% and the $R_1$ decrease byte count may be set at 128 bytes. Thus, for each 5 minute interval, $R_1$ will be decreased by 128 bytes if the hybrid gateway 12, 120 successfully receives 12 HMP messages (assuming 3 HMP messages are transmitted per minute). This operation will prevent a deadlock situation where the value of $R_1$ results in the TLB algorithm always deciding satellite transmission.

As mentioned above, the packet latency of the terrestrial link $D_1 = D_{HMP}$, where $D_{HMP}$ is one half (1/2) of the RTT (Round-Trip Time). The value of RTT is measured between the hybrid gateway 12, 120 and the hybrid terminal 13, 130 and changes over time due to variations in routing and traffic conditions. The TLB technique of the present invention tracks such changes and modifies decisions accordingly using HMP messages.

The HMP messages contain information, which enables the calculation of terrestrial RTT. Figure 5 illustrates a HMP message format 300 compliant with RFC 869. As shown, the HMP message format 300 contains a header 310 followed by data 320. The header 310 includes the following fields: System Type 311, Message Type 312, Port Number 313, Control Flag 314, Sequence Number 315, Password/Returned Sequence Number 316 and Checksum 317. The HMP message format 300 includes the following data fields: Data Type 321, 324, Data Length 322, 325 and Data 323, 326. The data fields, however, are network specific. Further, although Figure 5 shows only two data fields, the HMP message format 300 typically contains five data fields, but may also contain any number of data fields.

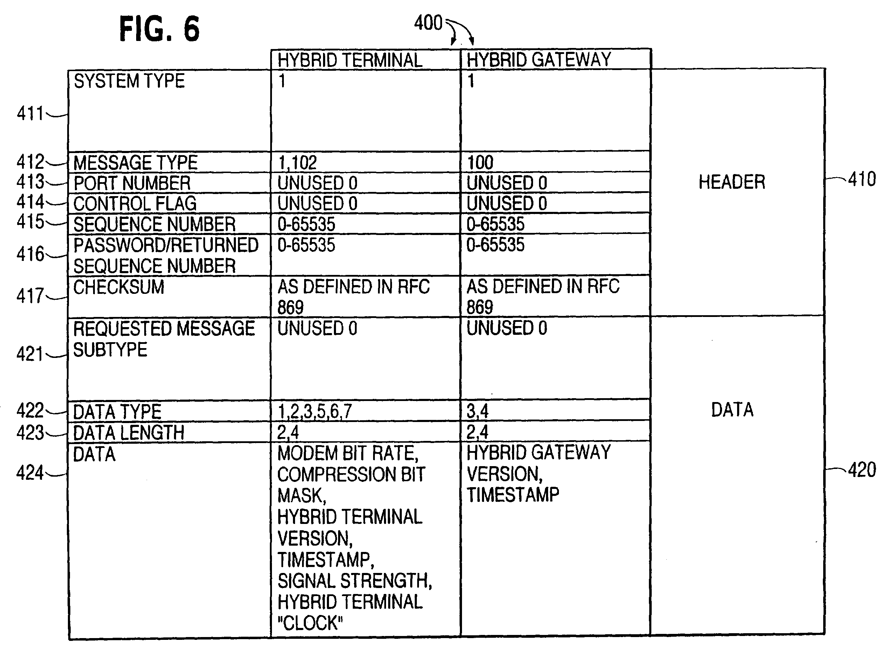

Figure 6 illustrates the format and contents of HMP message header fields 410 and data fields 420 according to one exemplary embodiment of the present invention. The System Type field 411 defines the type of machine being polled (e.g., Monitoring Host = 1, IMP=2, TAC=3, Gateway=4, SIMP=5, BBN VAX/C70 TCP=6, PAD=7, Reserved=8, TIU=9, FEP=10, Cronus Host=11, Cronus MCS=12). The Message Type field 412 defines the type of data (e.g., Trap=1, Status=2, Thruput=3, HTM=4, Parameters=5, Routing=6, Call Accounting=7, Poll=100, Error=101, Control Acknowledgment=102). Together, the System Type field 411 and Message Type field 412 determine the format of the data in the HMP message(s) 400. The Port Number field 413 may be used to multiplex similar messages in the hybrid terminal or hybrid gateway. The Control Flag field 414 may be used to pass control information. In this embodiment, the Port Number field 413 and Control Flag field 414 are not used and set to 0. The Sequence Number field 415 contains a sequence number, which is incremented when a new message of that particular type is sent. In this embodiment, the hybrid terminal 13 and hybrid gateway 12 each begin with Sequence Number =0 and increment the value by 1 for each successful transmission. Responses to the polling messages copy the sequence number from the polling message for identification and round-trip time calculations. In this embodiment, the Password/Returned Sequence Number field 416 is set to the value of the sequence number contained in the previously received HMP message. The Checksum field 417 as defined by RFC 869 is the one's complement sum of all the 16-bit words in the header and data area and is used for error detection. In this embodiment, the Checksum field 417 is set as defined in RFC 869.

Regarding the format and contents of the data fields of the HMP messages 400, the Requested message subtype field 421 may be used to send data and read parameters and may include information about the type of the data being sent or parameters being read. In this embodiment, the Requested message subtype field 421 is unused and set to 0. The Data Type field 422 contains the type of data being transmitted and received (e.g. Compression bit mask=1, Modem bit rate=2, Hybrid terminal DAK(DirecPC Access Kit) version=3, Hybrid gateway version=4, Timestamp=5, DAK status flag=6, HMP transmission parameter for DAK=7). The Data Length field 423 contains the length (in bytes) of the data. The Data field 424 contains the information being transmitted and received.

For example, as shown in Figure 6, the HMP contains the negotiated modem bit rate (Data Type=2) of the hybrid terminal 13, 130. The negotiated modem bit rate is an important element in the TLB algorithm. In this embodiment, the hybrid terminal 13, 130 sends the following values to the hybrid gateway 12, 120: Data Type: 2, Data Length: 2 (bytes), Data: First byte equals the MSB (Most Significant Byte) of the modem rate and the second byte equals the LSB (Least Significant Byte) of the modem rate.

In this example, the HMP message also contains the value of the HMP Transmission Parameter (Data Type=7) for the hybrid terminal 13, 130. The HMP Transmission parameter is advertised to the hybrid gateway 12, 120 in every HMP message and can be adjusted for each hybrid terminal 13, 130 to achieve the best estimate of RTT. In this embodiment, the hybrid terminal 13, 130 sends the following values to the hybrid gateway 12, 120: Data Type: 7, Data Length: 2 (bytes), Data: The value T (seconds) representing the time between HMP messages.

Each HMP message may be encapsulated within an IP packet in order to maintain inter-operability with all existing protocols and routers in the Internet 160, as described above. In such an embodiment, the protocol field is set to 20 (HMP), the source IP address is the hybrid gateway IP address and the destination address is the hybrid terminal terrestrial interface IP address, typically the dynamic IP address assigned by the ISP.

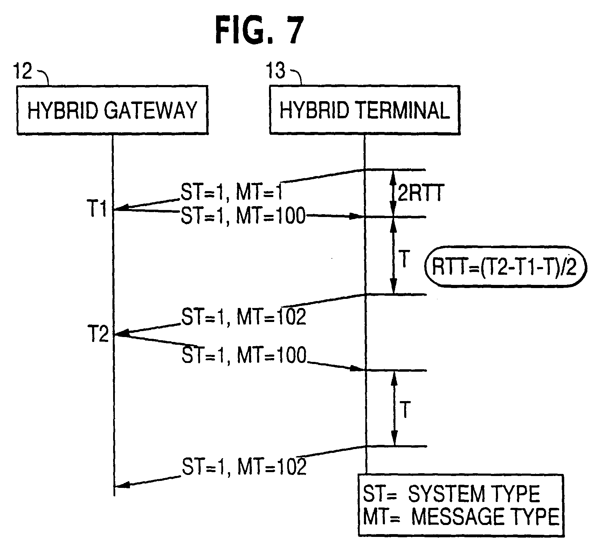

Figure 7 illustrates HMP message flow according to one embodiment of the present invention. As shown, the System Type fields for the hybrid terminal 13, 130 and the hybrid gateway 12, 120 are each set to 1 (ST=1) to monitor the hybrid terminal 13, 130. The hybrid terminal 13, 130 sends a TRAP message (MT=1) to the hybrid gateway 12, 120. The hybrid gateway 12, 120 responds by sending a POLL message (MT=100) to the hybrid terminal 13, 130. After receiving the POLL message, the hybrid terminal 13, 130 responds by sending a CONTROL ACKNOWLEDGMENT message (MT=102) to the hybrid gateway 12, 120. In contrast to the standard RFC 869 message type 102, the CONTROL ACKNOWLEDGMENT message (MT=102) sent to the hybrid gateway contains data, which can be used to calculate terrestrial RTT.

As shown in Figure 7, the hybrid terminal 13, 130 delays T seconds after the time the POLL message (MT=100) was received before sending the CONTROL ACKNOWLEDGMENT message (MT=102). The time T is configurable, with the default value of 20 seconds. If the hybrid terminal 13, 130 does not receive an HMP message from the hybrid gateway 12, 120, it sends an HMP TRAP message (MT=1) when its internal timer, with period T seconds, expires.

The packet numbering scheme tracks the HMP message flow. The sequence number increases only upon successful arrivals. In this embodiment, the first sequence number is 0 and the maximum sequence number is limited to 65,535 due to the 16-bit field in the HMP message header. On a loss-free connection, there is very little probability that the total number of HMP messages will exceed 65,535. If the maximum value for the sequence number is reached, the next sequence number is zero. This is not a problem because sequence number zero is always considered to be in sequence.

Under the command of the controller 11, 110, the hybrid gateway 12, 120 uses the data content of the HMP messages and a timer to determine terrestrial RTT. Referring again to Figure 7, the hybrid gateway 12, 120 sets the Timestamp field of each POLL message (MT=100) to the transmission time $T_1$. In one embodiment, $T_1$ is the current starting time for measurement of the RTT. When the hybrid gateway 12, 120 receives the CONTROL ACKNOWLEDGMENT message (MT=102) from the hybrid terminal 13, 130, the hybrid gateway 12, 120 calculates the difference between the received time T2 and the transmission time T1. The calculated difference less the delay time T is RTT. Therefore, RTT can be calculated according to the

following equation.

$$RTT = T_2 - T_1 - T$$

The packet latency of the terrestrial link $D_1$ may be determined directly from the value RTT by assuming the link is symmetric. That is,

$$D_1 = D_{HMP} = \frac{RTT}{2}.$$

In another embodiment of the present invention, instead of calculating $D_1$ directly from RTT, the instantaneous RTT measurement is smoothed using a low-pass filter according to the following equation.

$$R_{current} = \alpha * R_{prev} + (1 - \alpha) * M$$

In the smoothing equation, $R_{current}$ is the smoothed RTT estimate, $\alpha$ is the smoothing factor, $R_{prevt}$ is the previous smoothed RTT estimate and $M$ is the instantaneous RTT measurement from the HMP message exchange, i.e. $M=RTT$. The smoothed RTT, $R_{current}$ is updated every time a new measurement is made. In one embodiment, where $\alpha = 0.9$, ninety percent of each new estimate is from the previous estimate and ten percent is made from the new measurement. In embodiments which smoothes the RTT estimate, the packet latency of the terrestrial link $D_1$ is determined from the value $R_{current}$, where $D_1=D_{HMP}$ and

$$D_{HMP} = \frac{R_{current}}{2}.$$

The load balancing technique of the present invention reduces inaccurate RTT calculations that may result from lost HMP packets. Namely, the hybrid gateway 12, 120 will not calculate RTT if the hybrid gateway 12, 120 does not receive a HMP message from the hybrid terminal 13, 130 during a time interval of length T, receives a HMP message out-of-sequence, or receives a HMP message having a timestamp data field equal to zero. In such cases, the hybrid gateway 12, 120 will use a previously calculated RTT value and/or will use subsequent successfully received HMP message to calculate RTT.

After the better path is determined, the controller 11, 110 commands the hybrid gateway 12, 120 to format the data packet for either satellite or terrestrial transmission.

As described above, when the hybrid terminal 130 receives the requested data from the IP server 170, the requested data includes an IP Header field and an IP Payload field. The IP address assigned to the Internet server 170 from which the data was retrieved is designated as the source address in the IP Header field and the IP address assigned to the hybrid gateway 120 is designated as the destination address in the IP Header field. The IP Payload field contains the data requested by the hybrid terminal 130.

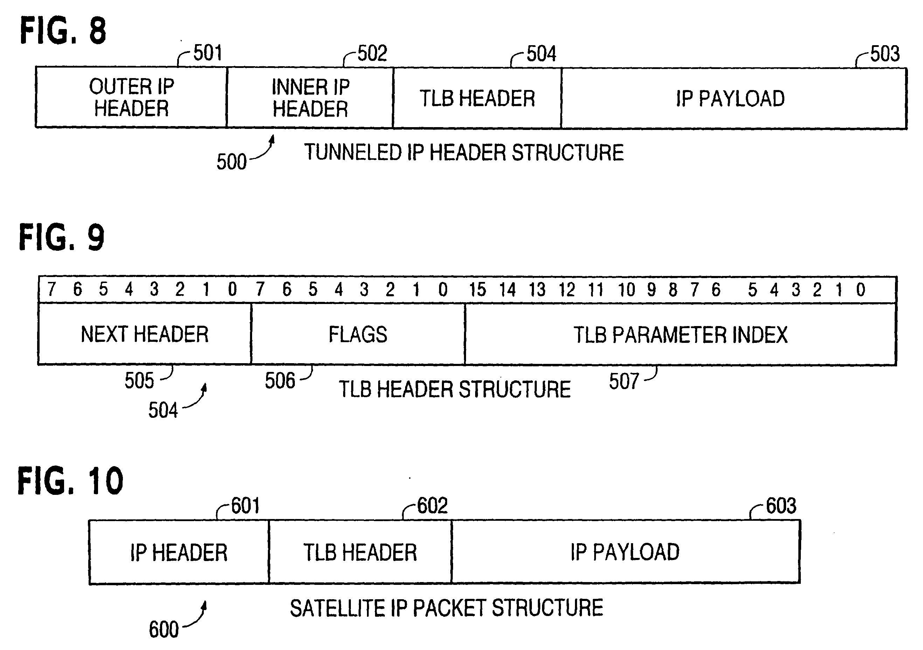

Figure 8 illustrates the format of a tunneled terrestrial packet 500 according to one embodiment of the present invention. As shown, the requested data is formatted as a tunneled terrestrial packet to include an Outer IP Header field 501, an Inner IP Header field 502, a TLB Header field 504 and an IP Payload 503.

Under the command of the controller 11, 110, the IP address assigned to the hybrid gateway 12, 120 is designated as the source address in the Outer IP Header field 501 and the IP address assigned to the hybrid terminal PPP link 13, 130 is designated as the destination address in the Outer IP Header field 501. This format will prevent a dial-up ISP router from rejecting redirected traffic if source-address filtering is performed.

A TLB header 504 is introduced between the Inner IP Header field 502 and the IP Payload field 503. Figure 9 illustrates the format of a TLB (Terrestrial Load Balance) Header field 504 according to one embodiment of the present invention. As shown, the TLB Header field 504 includes four octets. The NextHeader field 505 is an 8-bit selector, which stores the contents of the original IP Protocol Field of the Inner IP header field 502. For example, if the original IP Protocol field of the Inner IP Header field 502 is TCP, then the NextHeader field 505 stores a "6". The Flags field 506 is an 8-bit field in which bit 7 is a PUSH flag and the remaining bits are zero. The PUSH flag is used to inform the receiving hybrid terminal to immediately deliver the data packet to the TCP stack and bypass TLB reordering at the hybrid terminal.

The Inner IP Header field 502 is modified for a tunneled terrestrial packet to reflect the TLB Header field 504. That is, in the Inner IP Header field 502, the Total Length field is modified to reflect the length of the entire TLB IP packet, including the contents of the Inner IP Header field 502, the TLB Header field 504 and the IP Payload field 503. The Protocol field is set to 199 or any other unused Internet protocol identification. Since only the Protocol field of the Inner IP Header field 502 is affected, such modification will not cause incompatibility issues with any network switches or routers. The Header Checksum field is modified to reflect the Internet header checksum of the Inner IP header field 502.

Figure 10 illustrates the format of a satellite IP packet 600 according to one embodiment of the present invention. A TLB header field 602 is introduced between the IP Header field 601 and the IP Payload field 603 to maintain independence of the physical layer.

Packet loss over the Internet 160 is often high. Another feature of the TLB technique of the present invention is that some or all lost terrestrial packets transmitted to the hybrid terminal 13, 130 may be re-transmitted over the satellite channel 14, 140. The satellite channel 14, 140 offers greater reliability with concatenated error coding to provide a low BER (Bit-Error ratio) and bypasses congested landline connections that may result in lost data packets. Satellite re-transmitted packets that were originally transmitted terrestrially limits the satellite bandwidth spent on terrestrial re-transmission, since only the re-transmitted terrestrial data packets are affected. Re-transmission of the subsequent satellite packets is unnecessary, since the re-ordering software in the hybrid terminal 13, 130 retains those packets before passing it to the TCP/IP stack.

TCP provides a reliable transport layer. One of the ways TCP provides reliability in the present invention is that the hybrid terminal 13, 130 and hybrid gateway 12, 120 both acknowledge received data. Occasionally data segments and acknowledgments can be lost. TCP handles this problem by setting a timeout when data is transmitted. If the data is not acknowledged by the time the timeout expires, the data is retransmitted. In the event that a dynamically routed terrestrial data packet is lost, the hybrid gateway 12, 120 retransmits the lost data packet over the satellite channel 14, 140. The congestion window size of the terrestrial connection 15, 150 is not reduced when the data packet is transmitted over the satellite channel 14, 140.

In order to improve the throughput of the network 10, 100, the hybrid gateway 12, 120 may also perform TCP spoofing. That is, under the control of the controller 11, 110, the hybrid gateway 12, 120 prematurely acknowledges a TCP segment without waiting for the acknowledgment from the hybrid terminal 13, 130. This TCP spoofing technique gives the illusion of a low-latency network so that TCP slow start phase can progress more rapidly. The hybrid gateway 12, 120 locally buffers segments in transit. The actual acknowledgment from the hybrid terminal 13, 130 is suppressed upon arrival at the hybrid gateway 12, 120 to prevent duplicate acknowledgments from reaching the hybrid terminal 13, 130. If an acknowledgment never arrives and the hybrid gateway 12, 120 times out, the lost segment is retransmitted from the local buffer of the hybrid gateway 12, 120.

The use of asymmetric networks is becoming widespread, particularly in networks using a combination of both GEO satellites and terrestrial landlines. GEO satellites are able to offer high bandwidth services to a large geographical area. A receive-only VSAT is inexpensive to manufacture and easier to install than a satellite which can also transmit.

The present invention recognizes that while a high capacity GEO satellite is more effective in delivering large data packets (greater than 850 bytes in length) with less latency relative to many terrestrial-based technologies, certain landline technologies can deliver small packets with less latency.

As described above, the load balancing technique of the present invention enables network providers of asymmetric networks the ability to offer customers faster Web access by optimally routing requested data packets from an Internet server over the terrestrial landline connection and the satellite uplink facility. The load balancing technique decreases customer response times by optimally routing packets based upon packet size and network congestion. In addition, the load balancing technique requires relatively little satellite bandwidth and, in fact, helps to decrease satellite bandwidth utilization by off loading a portion of satellite traffic to landline terrestrial connections.

The load balancing technique of the present invention seamlessly inter-operates with existing TCP/IP networks and may be utilized with any COTS (Commercial-Off-The-Shelf) TCP/IP protocol stacks, any SLIP/PPP Internet service provider or any Internet hosts and routers. The load balancing technique is uniform, robust and does not require special purpose hardware and is compatible with all UNIX, MicroSoft Windows and DOS based applications. All parameters are programmable to facilitate modification and optimization for specific networks.

It will be obvious that the invention as described above may be varied in many ways. Such variations are not to be regarded as a departure from the spirit and scope of the invention. Rather, all such variations as would be obvious to one skilled in the art are intended to be included within the scope of the following claims.

**Claims**

1. A data transmission apparatus characterized by

   a hybrid gateway (12; 120) for receiving requests for data from a hybrid terminal (13; 130) over a terrestrial channel (15; 150) and for transmitting requested data to the hybrid terminal (13; 130) over either a satellite channel (14; 140) or the terrestrial channel (15; 150); and
   a controller (11; 110) for dynamically determining whether to route the requested data over the bi-directional terrestrial channel (15; 150) or the satellite channel (14; 140).

2. The data transmission apparatus according to claim 1, characterized in that the controller (11; 110) commands cost values to be computed for the terrestrial channel (15; 150) and the satellite channel (14; 140) using a cost equation.

3. The data transmission apparatus according to claim 2, characterized in that the controller (11; 110) commands the requested data to be routed based on the lowest cost value.

4. The data transmission apparatus according to claim 2 or 3, characterized in that the cost equation considers size of the requested data.

5. The data transmission apparatus according to any of claims 2-4, characterized in that the cost equation considers unacknowledged data in at least one of the terrestrial channel (15; 150) and the satellite channel (14; 140).

6. The data transmission apparatus according to any of claims 2-5, characterized in that the cost equation considers data retransmission in at least one of the terrestrial channel (15; 150) and the satellite channel (14; 140).

7. The data transmission apparatus according to any of claims 2-6, characterized in that the cost equation considers capacity of at least one of the terrestrial channel (15; 150) and the satellite channel (14; 140).

8. The data transmission apparatus according to any of claims 2-7, characterized in that the cost equation considers latency of at least one of the terrestrial channel (15; 150) and the satellite channel (14; 140).

9. The data transmission apparatus according to claim 8, characterized in that the controller (11; 110) commands latency measurements to be made periodically for at least one of the terrestrial channel (15; 150) and the satellite channel (14; 140).

10. The data transmission apparatus according to any of claims 1-9, characterized in that the controller commands the hybrid gateway (12; 120) to prematurely acknowledges a TCP segment without waiting for actual acknowledgment from the hybrid terminal (13; 130).

FIG. 1

# FIG. 1(a)

CONTROLLER 11

INPUT THREAD 111

MAIN THREAD 112

OUTPUT THREAD 113

TO HYBRID TERMINAL 13

TO SATELLITE GATEWAY 14

TO INTERNET SERVERS 17

EP 1 052 812 A2

## FIG. 2

HYBRID TERMINAL

APPLICATION

SPECIAL PPP

DPC DRIVER | SERIAL

DirecPC | SERIAL

MODEM

APPLICATION SERVER

THE INTERNET

POINT-OF-PRESENCE
(POP)

SATELLITE
GATEWAY

LAN

CONTROLLER

HYBRID GATEWAY

EP 1 052 812 A2

# FIG. 3

```
┌─────────────────────────────┐
│   RECEIVE REQUEST FOR DATA   │ ── S10
│     FROM HYBRID TERMINAL     │
└─────────────────────────────┘
              │
┌─────────────────────────────┐
│      DECAPSULATE REQUEST     │ ── S20
│           FOR DATA           │
└─────────────────────────────┘
              │
┌─────────────────────────────┐
│     RETRIEVE REQUESTED DATA  │ ── S30
└─────────────────────────────┘
              │
┌─────────────────────────────┐
│  DETERMINE OPTIMAL PATH FOR  │ ── S40
│        REQUESTED DATA        │
└─────────────────────────────┘
              │
┌─────────────────────────────┐
│     FORMAT REQUESTED DATA    │ ── S50
│      BASED ON OPTIMAL PATH   │
└─────────────────────────────┘
              │
┌─────────────────────────────┐
│    TRANSMIT REQUESTED DATA   │ ── S60
│    TO HYBRID TERMINAL OVER   │
│         OPTIMAL PATH         │
└─────────────────────────────┘
```

# FIG. 4

~200

| OUTER IP HEADER | INNER IP HEADER | IP PAYLOAD |
|---|---|---|

201 — 202 — 203 —

# FIG. 5

300

| | 0  311  7 | 8  312  15 |
|---|---|---|
| 313 — 0 | SYSTEM TYPE | MESSAGE TYPE |
| 1 | PORT NUMBER | CONTROL FLAG ~314 |
| 2 | SEQUENCE NUMBER | ~315 |
| 3 | PASSWORD/RETURNED SEQ. NUMBER | ~316 |
| 4 | CHECKSUM | ~317 |
| 321 — | DATA 1 TYPE | DATA1 LEN ~322 |
| 323 — | DATA1 | |
| 324 — | DATA2 TYPE | DATA2 LEN ~325 |
| 326 — | DATA2 | |

310 { ... }  320 { ... }

# FIG. 6

400

| | HYBRID TERMINAL | HYBRID GATEWAY | | |
|---|---|---|---|---|
| SYSTEM TYPE | 1 | 1 | | |
| MESSAGE TYPE | 1,102 | 100 | HEADER | 410 |
| PORT NUMBER | UNUSED 0 | UNUSED 0 | | |
| CONTROL FLAG | UNUSED 0 | UNUSED 0 | | |
| SEQUENCE NUMBER | 0-65535 | 0-65535 | | |
| PASSWORD/RETURNED SEQUENCE NUMBER | 0-65535 | 0-65535 | | |
| CHECKSUM | AS DEFINED IN RFC 869 | AS DEFINED IN RFC 869 | | |
| REQUESTED MESSAGE SUBTYPE | UNUSED 0 | UNUSED 0 | DATA | |
| DATA TYPE | 1,2,3,5,6,7 | 3,4 | | |
| DATA LENGTH | 2,4 | 2,4 | | |
| DATA | MODEM BIT RATE, COMPRESSION BIT MASK, HYBRID TERMINAL VERSION, TIMESTAMP, SIGNAL STRENGTH, HYBRID TERMINAL "CLOCK" | HYBRID GATEWAY VERSION, TIMESTAMP | | 420 |

EP 1 052 812 A2

# FIG. 7

12 HYBRID GATEWAY

13 HYBRID TERMINAL

ST=1, MT=1

T1 ST=1, MT=100

2RTT

T

$RTT=(T2-T1-T)/2$

ST=1, MT=102

T2 ST=1, MT=100

T

ST=1, MT=102

ST= SYSTEM TYPE
MT= MESSAGE TYPE

# FIG. 8

| OUTER IP HEADER | INNER IP HEADER | TLB HEADER | IP PAYLOAD |
|---|---|---|---|

501 — 502 — 504 — 503

TUNNELED IP HEADER STRUCTURE

500

# FIG. 9

| 7 6 5 4 3 2 1 0 | 7 6 5 4 3 2 1 0 | 15 14 13 12 11 10 9 8 7 6 5 4 3 2 1 0 |
|---|---|---|
| NEXT HEADER | FLAGS | TLB PARAMETER INDEX |

505 — 506 — 507 —

TLB HEADER STRUCTURE

504

# FIG. 10

| IP HEADER | TLB HEADER | IP PAYLOAD |
|---|---|---|

601 — 602 — 603

SATELLITE IP PACKET STRUCTURE

600